# EUROPÄISCHE PATENTANMELDUNG

(11) **EP 1 832 950 A1**
(43) Veröffentlichungstag der Anmeldung: **12.09.2007**
(21) Anmeldenummer: 06005027.5
(22) Anmeldetag: 11.03.2006
(51) Int. Cl.: G05D 16/20

(54) **Regelungseinrichtung zur Regelung des fluidischen Arbeitsdrucks**

(71) Anmelder: Festo AG & Co., 73734 Esslingen (DE)
(72) Erfinder: Stingel, Jürgen, 70180 Stuttgart (DE)
(74) Vertreter: Vetter, Hans

(57) **Zusammenfassung**

Es wird eine Regelungseinrichtung zur Regelung des fluidischen Arbeitsdrucks (A) in einer fluidischen Vorrichtung (75) mittels eines elektrisch steuerbaren Druckproportionalventils vorgeschlagen. Das Ventilglied (24) dieses Druckproportionalventils ist durch den Vorsteuerdruck in einer durch ein Steuerventil (70) druckbeaufschlagbaren Vorsteuerkammer (24) betätigbar. Einem einen elektronischen Arbeitsdruck-Regler (73) aufweisenden Arbeitsdruck-Regelkreis, an dem ein Arbeitsdruck-Sollwert (Ps) sowie ein durch einen Arbeitsdruck-Sensor (71) erfasster Arbeitsdruck-Istwert (Pi) anliegt, ist ein Vorsteuerdruck-Regelkreis zur Regelung des Steuerventils (70) unterlagert, wobei die Regelung in Abhängigkeit des Ausgangssignals des Arbeitsdruck-Reglers (73) als Führungsgröße und des durch einen Vorsteuerdruck-Sensor (72) erfassten Vorsteuerkammerdrucks (Pm) als Istwert erfolgt. Durch diese zweischleifige Reglerstruktur in Verbindung mit zwei im Druckproportionalventil angeordneten Sensoren kann eine hohe Reglerdynamik und Reglergenauigkeit erreicht werden.

## Beschreibung

Die Erfindung betrifft eine Regelungseinrichtung zur Regelung des fluidischen Arbeitsdrucks in einer fluidischen Vorrichtung mittels eines elektrisch steuerbaren Druckproportionalventils, das wenigstens einen Versorgungsdruckanschluss, einen Druckablassanschluss und einen mit der fluidischen Vorrichtung verbindbaren Arbeitsdruckanschluss besitzt, und dessen Ventilglied durch den Vorsteuerdruck in einer durch ein Steuerventil druckbeaufschlagbaren Vorsteuerkammer betätigbar ist, mit einem einen elektronischen Arbeitsdruck-Regler aufweisenden Arbeitsdruck-Regelkreis, an dem ein Arbeitsdruck-Sollwert sowie ein durch einen Arbeitsdruck-Sensor erfasster Arbeitsdruck-Istwert anliegt.

Bei einer aus der DE 19504364 C2 bekannten Regelungseinrichtung wird versucht, eine gute Regelqualität und das Verhindern eines Schwingens durch mechanische konstruktive Maßnahmen zu erreichen. Zur Regelung wird ein üblicher Regelkreis eingesetzt, bei dem der Arbeitsdruck-Regler in Abhängigkeit eines Arbeitsdruck-Sollwerts und eines Arbeitsdruck-Istwerts auf den Vorsteuerdruck einwirkt. Für manche Anwendungen hat sich jedoch das Bedürfnis herausgestellt, die Regeldynamik und die Regelgenauigkeit noch stärker zu verbessern.

Eine Aufgabe der vorliegenden Erfindung besteht somit darin, eine Regelungseinrichtung der eingangs genannten Gattung mit einer besseren Regelungsdynamik und Regelungsgenauigkeit zu schaffen.

Diese Aufgabe wird erfindungsgemäß dadurch gelöst, dass im Arbeitsdruck-Regelkreis ein unterlagerter Vorsteuerdruck-Regelkreis zur Regelung des Steuerventils in Abhängigkeit des Ausgangssignals des Arbeitsdruck-Reglers als Führungsgröße und des durch einen Vorsteuerdruck-Sensor erfassten Vorsteuerkammerdrucks als Istwert vorgesehen ist.

Durch die erfindungsgemäße zweischleifige Reglerstruktur in Verbindung mit Sensoren zur Erfassung des Arbeitsdrucks und des Vorsteuerdrucks kann in vorteilhafter Weise eine Regelung des Arbeitsdrucks beziehungsweise eines Druckproportionalventils mit deutlich verbesserter Dynamik und Genauigkeit gegenüber einer einschleifigen Regelung erreicht werden. Die Erfassung auch des Vorsteuerkammerdrucks beziehungsweise Vorsteuerdrucks und Verarbeitung in dieser zweischleifigen Regelung beziehungsweise Kaskadenregelung verhindert ein Regler-Überschwingen, was zu der erwünschten Verbesserung der Reglergenauigkeit und -schnelligkeit führt. Die Erfindung kann auf praktisch jedes Druckproportionalventil mit Vorsteuerventil und einer Vorsteuerkammer angewandt werden, wobei lediglich zwei Sensoren eingesetzt werden müssen.

Durch die in den Unteransprüchen aufgeführten Maßnahmen sind vorteilhafte Weiterbildungen und Verbesserungen der im Anspruch 1 angegebenen Regelungseinrichtung möglich.

Zur präzisen Regelung des Vorsteuerkammerdrucks ist das Steuerventil zweckmäßigerweise als elektrisch steuerbares Proportionalventil ausgebildet.

Die Vorsteuerkammer ist bevorzugt als Membrankammer ausgebildet und steht über eine elastische Membran mit dem Ventilglied in Wirkverbindung.

Um die Stellkraft durch den Druck in der Vorsteuerkammer nur in eine Richtung ausüben zu müssen, ist bevorzugt eine gegen den Druck der Vorsteuerkammer auf das Ventilglied einwirkende Druckfeder vorgesehen.

Der Arbeitsdruck-Sensor ist in vorteilhafter Weise im Druckproportionalventil integriert und dabei insbesondere im Arbeitsdruckanschluss oder in einem mit diesem verbundenen Kanal angeordnet.

In einer zweckmäßigen Ausbildung der zweischleifigen Reglerstruktur ist ein im Vorsteuerdruck-Regelkreis enthaltener Vorsteuerdruck-Regler mit dem Steuerventil zur Regelung desselben verbunden.

Der Vorsteuerdruck-Sensor ist zweckmäßigerweise in der Vorsteuerkammer angeordnet und somit ebenfalls im Druckproportionalventil integriert.

Ein Ausführungsbeispiel der Erfindung ist in der Zeichnung dargestellt und in der nachfolgenden Beschreibung näher erläutert. Es zeigen
- Figur 1: eine Schnittdarstellung eines Druckproportionalventils als Ausführungsbeispiel, das mit einem Vorsteuerdruck-Sensor und einem Arbeitsdruck-Sensor versehen ist, und
- Figur 2: eine Darstellung der zweischleifigen Reglerstruktur als Ausführungsbeispiel der Erfindung.

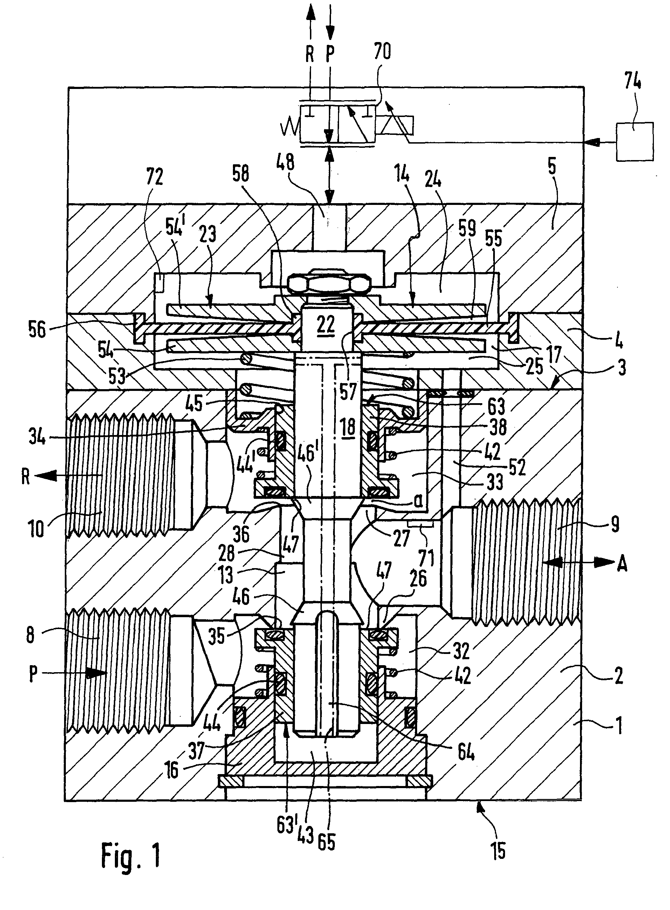

Das in Figur 1 dargestellte, als Druckproportionalventil ausgebildete Druckregelventil besitzt ein mehrteiliges Ventilgehäuse 1, bestehend aus einem Grundkörper 2, einer an einer axialen Stirnfläche 3 des Grundkörpers 2 angesetzten Zwischenplatte 4 und einer auf der Zwischenplatte 4 sitzenden Abschlussplatte 5. Letztere ist über Schrauben 6 mit dem Grundkörper 2 verschraubt, wobei die dazwischen liegende Zwischenplatte 4 ebenfalls gehalten wird. An der seitlichen Außenfläche des Grundkörpers 2 befinden sich ein Versorgungsdruckanschluss (P) 8, ein Arbeitsdruckanschluss (A) 9 und ein Druckablassanschluss (R) 10, der beispielsweise als Entlüftungsanschluss ausgebildet ist.

Die vorgenannten Anschlüsse 8, 9, 10 münden im Innern des Grundkörpers 2 in einen sich axial erstreckenden Aufnahmeraum 13 für Teile einer in dem Ventilgehäuse 1 untergebrachten und allgemein mit 14 bezeichneten Stelleinrichtung. Der Aufnahmeraum 13 ist im Wesentlichen zylindrisch konturiert, allerdings in Längsrichtung mehrfach abgestuft.

Im Bereich der axialen Stirnfläche 3 öffnet sich der Aufnahmeraum 13 in einen in der Zwischenplatte 4 und/oder der Abschlussplatte 5 ausgebildeten Arbeitsraum 17. An der entgegengesetzten Stirnfläche 15 des Grundkörpers 2 ist der Aufnahmeraum 13 durch einen in ihn eingesetzten Verschlussdeckel 16 dicht verschlossen.

Die Stelleinrichtung 14 umfasst ein stangenförmiges Stellglied 18, das sich koaxial in dem Aufnahmeraum 13 erstreckt und mit einem Endabschnitt 22 in den Arbeitsraum 17 hineinragt. An dem Endabschnitt 22 ist eine Beaufschlagungseinrichtung 23 angeordnet, die den Arbeitsraum 17 axial und unter Abdichtung in eine der Abschlussplatte 5 zugeordnete Vorsteuerkammer 24 und eine dem Grundkörper 2 zugeordnete Gegendruckkammer 25 unterteilt. Die Beaufschlagungseinrichtung 23 ist gemeinsam mit dem Stellglied 18 in Längsrichtung des Arbeitsraumes 17 bewegbar. Die entsprechende Bewegung sei als Regelbewegung bezeichnet. Der Aufnahmeraum 13 steht mit der Gegendruckkammer 25 in unmittelbarer Verbindung.

Der Arbeitsdruckanschluss 9 steht über eine in dem Aufnahmeraum 13 definierte erste Überströmöffnung 26 mit dem Versorgungsdruckanschluss 8 in Verbindung. Des Weiteren steht er über eine mit axialem Abstand zu der ersten Überströmöffnung 26 angeordnete und ebenfalls in dem Aufnahmeraum 13 befindliche zweite Überströmöffnung 27 mit dem Druckablassanschluss 10 in Verbindung. Über die Regelbewegung des Stellgliedes 18 lassen sich die von den Überströmöffnungen 26, 27 zur Verfügung gestellten Überströmquerschnitte variabel stufenlos einstellen.

Der Arbeitsdruckanschluss 9 mündet in dem axial zwischen den beiden Überströmöffnungen 26, 27 angeordneten Zwischenabschnitt 28 in den Aufnahmeraum 13. Der Versorgungsdruckanschluss 8 mündet in den sich in Richtung des Verschlussdeckels 16 axial an die erste Überströmöffnung 26 anschließenden ersten Endabschnitt 32 des Aufnahmeraumes 13. Der Druckablassanschluss 10 mündet in den zweiten Endabschnitt 33 des Aufnahmeraumes 13, der sich auf der dem ersten Endabschnitt 32 entgegengesetzten Axialseite des Zwischenabschnittes 28 befindet. Der erste Endabschnitt 32 wird durch den Verschlussdeckel 16 begrenzt. Der zweite Endabschnitt 33 ist durch eine Trennwand 34 von der sich anschließenden Gegendruckkammer 25 abgeschottet.

Jede Überströmöffnung 26, 27 ist von einem gehäusefesten ringförmigen Ventilsitz 35, 36 umgeben, der axial von dem Zwischenabschnitt 28 wegweist. In dem ersten Endabschnitt 32 befindet sich ein erstes Verschlussglied 37, in dem zweiten Endabschnitt 33 ist ein zweites Verschlussglied 38 angeordnet. Beide Verschlussglieder 37, 38 sind in dem zugeordneten Endabschnitt 32, 33 axial beweglich, die mögliche Bewegungsrichtung fällt also mit der Richtung der Regelbewegung des Stellgliedes 18 zusammen.

Jedes Verschlussglied 37, 38 kann eine Schließstellung einnehmen, in der es am zugeordneten Ventilsitz 35, 36 dicht anliegt und dadurch die zugeordnete Überströmöffnung 26, 27 vollständig verschließt. In diesem Falle ist die Verbindung des Arbeitsdruckanschlusses 9 zum zugeordneten Versorgungsdruckanschluss 8 beziehungsweise Druckablassanschluss 10 unterbrochen. Ferner kann jedes Verschlussglied 37, 38 verschiedene Offenstellungen einnehmen, in denen es um einen mehr oder weniger großen Betrag vom zugeordneten Ventilsitz 35, 36 abgehoben ist, sodass es dem Öffnungsgrad entsprechend unterschiedliche Überströmquerschnitte für das Druckmittel zur Verfügung stellen kann.

Jedes Verschlussglied 37, 38 ist von einer Federanordnung 42 im Schließsinne beaufschlagt. Diese ist beim Ausführungsbeispiel von einer Schraubendruckfeder gebildet. Sie stützt sich einerseits am jeweiligen Verschlussglied 37, 38 und andererseits am zugeordneten Verschlussdeckel 16 beziehungsweise von der Trennwand 34 ab. Fehlt eine Gegenkraft, werden die Verschlussglieder 37, 38 durch die Federkräfte der Federanordnungen 42 in den Schließstellungen gehalten.

Das erste Verschlussglied 37 ist in einer Ausnehmung 43 des Verschlussdeckels 16 axial beweglich geführt. Im Bereich des Führungskontaktes erfolgt zum Beispiel durch einen am beweglichen Verschlussglied 37 angeordneten Dichtring 44 eine Abdichtung, die verhindert, dass am Versorgungsdruckanschluss 8 anstehendes Druckmittel in die Ausnehmung 43 gelangt.

In entsprechender Weise ist das zweite Verschlussglied 38 in einer die Trennwand 34 durchsetzenden Durchbrechung 45 axial verschiebbar geführt. Ein Dichtring 44' verhindert eine Druckmittelströmung zwischen der Gegendruckkammer 25 und dem zweiten Endabschnitt 33 des Aufnahmeraumes 13.

In bevorzugter Ausgestaltung werden die beiden Verschlussglieder 37, 38 von dem Stellglied 18 wie abgebildet koaxial durchsetzt. Dabei sind ein jeweiliges Verschlussglied 37, 38 und das Stellglied 18 relativ zueinander axial beweglich. Jedem Verschlussglied 37, 38 ist allerdings ein als Betätigungspartie 46, 46' bezeichneter Bewegungsanschlag zugeordnet, der fest und insbesondere einstückig mit dem Stellglied 18 verbunden ist. Die Anordnung ist so getroffen, dass die Betätigungspartien 46, 46' lediglich entgegen der Schließkraft der Federanordnungen 42 auf das zugeordnete Verschlussglied 37, 38 einwirken können. Beim Ausführungsbeispiel befinden sie sich in dem Längsabschnitt des Stellgliedes 18, der sich axial zwischen den beiden Verschlussgliedern 37, 38 erstreckt. Sie sind hier in Gestalt insbesondere ringsum laufender Radialvorsprünge ausgebildet, die an der zugewandten Stirnfläche 47 des betreffenden Verschlussgliedes 37, 38 anliegen können. Ihr axialer Abstand voneinander ist so gewählt, dass sie an den beiden Stirnflächen 47 gerade anliegen, wenn sich beide Verschlussglieder 37, 38 in der Schließstellung befinden. Diese Stellung des Stellgliedes 18 beziehungsweise der gesamten Stelleinrichtung 14 sei als Neutralstellung bezeichnet.

Im Betrieb des Druckproportionalventils steht am Versorgungsdruckanschluss 8 unter einem Primärdruck stehendes fluidisches Druckmittel an. Der Arbeitsdruckanschluss 9 steht mit einem nicht dargestellten Verbraucher in Verbindung, der einen exakten, durch einen Sollwert vorgegebenen Druck benötigt, der durch das Druckproportionalventil entsprechend eingeregelt werden soll.

Hat der Arbeitsdruck den gewünschten Wert, so verbleibt die Stelleinrichtung 14 in der erläuterten Neutralstellung. Fällt der Arbeitsdruck unter den vorgegebenen Sollwert, so verlagert sich das Stellglied 18 in Richtung der unteren Stirnfläche 15, wobei ihre erste Betätigungspartie 46 das erste Verschlussglied 37 vom zugeordneten Ventilsitz abhebt. Dadurch strömt Druckmittel aus dem Versorgungsdruckanschluss 8 zum Arbeitsdruckanschluss 9 und bewirkt dort eine Druckerhöhung. Die betreffende Regelstellung der Stelleinrichtung 14 wird als Speisestellung bezeichnet. Es sind unterschiedliche Speisestellungen möglich, die sich im Betrag des jeweils zur Verfügung gestellten Überströmquerschnittes unterscheiden. Bei allen Speisestellungen bleibt die zweite Überströmöffnung 27 verschlossen. Infolge der Relativbewegung zwischen dem bewegten Stellglied 18 und dem feststehenden zweiten Verschlussglied 38 hat sich dabei die Betätigungspartie 46' um einen mehr oder weniger großen Betrag von der Stirnfläche 47 des zugeordneten zweiten Verschlussgliedes 38 entfernt.

Übersteigt der Arbeitsdruck den Sollwert, so verlagert sich das Stellglied 18 in Gegenrichtung. Sobald die Betätigungspartie 46' das zweite Verschlussglied 38 erreicht hat, wird dieses vom ersten Ventilsitz 36 abgehoben, wobei zum Zeitpunkt des Abhebens die erste Überströmöffnung 26 bereits wieder geschlossen ist. Nun kann Druckmittel aus dem Arbeitsdruckanschluss 9 über den Druckablassanschluss 10 ausströmen. Die betreffende Regelstellung wird als Entlüftungsstellung bezeichnet.

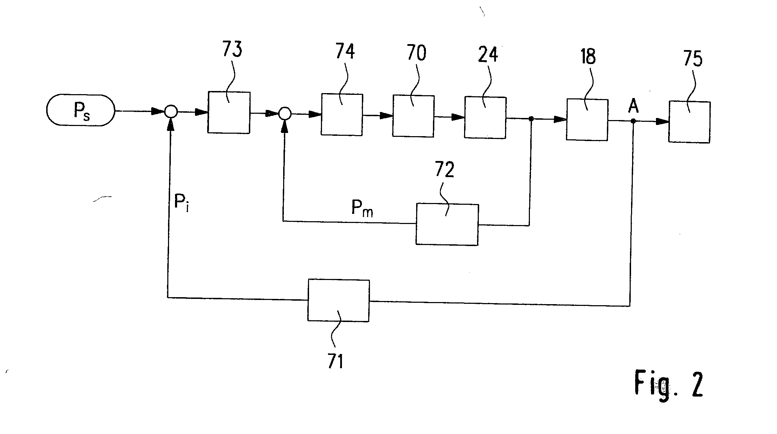

Die geschilderte Regelbewegung der Stelleinrichtung 14 wird von einem Vorsteuerkammerdruck Pm beeinflusst, mit dem die Vorsteuerkammer 24 beaufschlagt wird. Dieser Vorsteuerkammerdruck wird durch ein als Proportionalregelventil ausgebildetes Steuerventil 70 vorgegeben, das diesen Druck über den Steuerkanal 48 der Vorsteuerkammer 24 zuführt. Das Steuerventil 70 ist insbesondere als elektrisch steuerbares Ventil ausgebildet, beispielsweise als Magnetventil oder Piezoventil. Der Vorsteuerkammerdruck wird dabei geregelt, wie dies in Verbindung mit Figur 2 noch näher erläutert wird. Der Vorsteuerkammerdruck Pm wirkt auf die mit dem Stellglied 18 verbundene Beaufschlagungseinrichtung 23, sodass das Stellglied 18 in Richtung der Speisestellung beaufschlagt wird. Dem Steuerdruck wirkt der momentan herrschende Sekundärdruck entgegen, der in der Gegendruckkammer 25 anliegt. Zu diesem Zweck ist die Gegendruckkammer 25 über einen im Ventilgehäuse 1 ausgebildeten Verbindungskanal 52 an den Arbeitsdruckanschluss 9 angeschlossen.

Die der Vorsteuerdruckkraft entgegenwirkende Gegenkraft wird allerdings noch durch eine mechanische Federeinrichtung 53 unterstützt, die das Stellglied 18 ständig in Richtung der Entlüftungsstellungen beaufschlagt.

Die Federeinrichtung 53 sorgt dafür, dass die Stelleinrichtung 14 bei druckloser Vorsteuerkammer 24 eine Grundstellung einnimmt. Diese Grundstellung ist eine Entlüftungsstellung, wie sie oben bereits erwähnt wurde. Besagte Grundstellung nimmt die Stelleinrichtung 14 selbsttätig beziehungsweise automatisch ein, wenn der Steuerdruck gleich null ist, das heißt, dem herrschenden Umgebungsdruck entspricht.

Die beispielsgemäße Beaufschlagungseinrichtung 23 umfasst zwei axial gestaffelt angeordnete Beaufschlagungsscheiben 54, 54', die koaxial zu dem Stellglied 18 angeordnet und daran beispielsweise durch eine Schraubverbindung festgelegt sind. Ihr Außendurchmesser ist geringer als der Innendurchmesser des Arbeitsraumes 17. Ferner umfasst die Beaufschlagungseinrichtung 23 eine aus flexiblem elastischem Material bestehende, luftundurchlässige Membran 55, über die das Stellglied 18 axial beweglich am Ventilgehäuse 1 aufgehängt ist. Sie besteht aus einem Material mit gummielastischen Eigenschaften und bewirkt eine fluiddichte Abtrennung zwischen der Vorsteuerkammer 24 und der Gegendruckkammer 25 und ist mit ihrem äußeren Rand 56 ringsum gehäusefest fixiert. Diese Membran 55 verfügt des Weiteren über eine zentrale Durchbrechung 57, mit der sie auf den Endabschnitt 22 des Stellgliedes 18 aufgesteckt ist. An Ort und Stelle gehalten wird sie dort durch die beiden Beaufschlagungsscheiben 54, 54', die den die Durchbrechung 57 umgebenden Rand 58 zwischen sich einspannen.

Die dem zweiten Ventilsitz 36 entgegengesetzte axiale Stirnfläche 63 des zweiten Verschlussgliedes 38 wird von dem in der Gegendruckkammer 25 befindlichen Druckmittel beaufschlagt. Sie bildet daher einen beweglichen Wandabschnitt der Gegendruckkammer 25. Um die dabei auftretenden Druckkräfte zu kompensieren, ist die dem zugeordneten Ventilsitz 35 des anderen ersten Verschlussgliedes 37 entgegengesetzte Stirnfläche 63' beim Ausführungsbeispiel den gleichen Druckverhältnissen ausgesetzt. Zu diesem Zweck ist ein Druckkraft-Ausgleichskanal 64 vorgesehen, der die Ausnehmung 43 ständig mit dem Arbeitsdruckanschluss 9 verbindet. Dieser Kanal ist vorwiegend von einer Längsnut gebildet, die am Außenumfang desjenigen Abschnittes des Stellgliedes ausgenommen ist, auf welchem das erste Verschlussglied 37 längsbeweglich sitzt. Die beiden Stirnflächen 63, 63' sind gleichgroß.

Da die beiden Verschlussglieder 37, 38 mechanisch voneinander entkoppelt sind, besitzt das Druckproportionalventil an sich schon eine gute Regelqualität, indem im Fall eines Schwingens des einen Verschlussgliedes die Funktion des anderen unbeeinträchtigt bleibt. Eine wesentliche Verbesserung der Regelqualität, insbesondere der Regeldynamik und der Regelgenauigkeit, wird dabei noch durch die in Figur 2 dargestellte zweischleifige Reglerstruktur erreicht. Hierzu ist innerhalb des Arbeitsdruckanschlusses 9 ein erster Drucksensor 71 zur Messung des Arbeitsdrucks Pi und in der Vorsteuerkammer 24 ein zweiter Drucksensor 72 zur Messung des Vorsteuerkammerdrucks Pm angeordnet. Selbstverständlich könnten diese Drucksensoren 71, 72 auch an anderen Positionen angeordnet sein, wo jeweils der entsprechende Druck herrscht.

Einem als äußerer Regler geschalteten Arbeitsdruckregler 73 wird die Differenz zwischen Arbeitsdruck-Sollwert Ps und Arbeitsdruck-Istwert Pi zugeführt, wobei der Arbeitsdruck-Istwert Pi dem durch den ersten Drucksensor 71 gemessenen Druckwert entspricht. Der Ausgang des Arbeitsdruckreglers 73 bildet die Führungsgröße für den unterlagerten Vorsteuerdruck-Regelkreis. Dieser enthält einen Vorsteuerdruck-Regler 74, dem die Differenz zwischen der am Ausgang des Arbeitsdruckreglers 73 anliegenden Führungsgröße dem Istwert des Vorsteuerkammerdrucks Pm zugeführt wird. Der Vorsteuerkammerdruck wird durch den zweiten Drucksensor 72 erfasst. Der Vorsteuerdruck-Regler 74 wirkt auf das Steuerventil 70 als Stelleinrichtung des Regelkreises ein, durch das ein entsprechender Vorsteuerdruck in der Vorsteuerkammer 24 erzeugt wird, der wiederum im zweiten Drucksensor 72 erfasst wird. Die Vorsteuerkammer 24 bildet dabei zusammen mit dem Stellglied 18 des Druckproportionalventils die Regelstrecke. Der dadurch eingeregelte Arbeitsdruck A wird zum einen durch den ersten Drucksensor 71 gemessen und wird zum anderen dem in Figur 1 nicht dargestellten fluidischen Verbraucher 75 zugeführt. Die beschriebene zweischleifige Druckreglerstruktur wird auch als Kaskadenregelung bezeichnet.

Die beschriebene zweischleifige Druckreglerstruktur kann analog oder digital arbeiten. An Stelle einer analogen Vorgabe des Arbeitsdruck-Sollwerts Ps bei analoger Ausführung wird dieser im Falle einer digitalen Ausbildung digital vorgegeben und den beiden Drucksensoren 71, 72 sind jeweils Analog-Digital-Wandler nachgeschaltet.

Das in Figur 1 beschriebene Druckproportionalventil als Regelventil ist nur eine von vielen möglichen Ausführungsvarianten für ein solches Regelventil, wobei im Rahmen der Erfindung sämtliche Proportionalventile verwendet werden können, die über einen Vorsteuerdruck betätigbar sind.

## Patentansprüche

1. Regelungseinrichtung zur Regelung des fluidischen Arbeitsdrucks (A) in einer fluidischen Vorrichtung mittels eines elektrisch steuerbaren Druckproportionalventils, das wenigstens einen Versorgungsdruckanschluss (8), einen Druckablassanschluss (10) und einen mit der fluidischen Vorrichtung verbindbaren Arbeitsdruckanschluss (9) besitzt, und dessen Ventilglied (18) durch den Vorsteuerdruck in einer durch ein Steuerventil (70) druckbeaufschlagbaren Vorsteuerkammer (24) betätigbar ist, mit einem einen elektronischen Arbeitsdruck-Regler (73) aufweisenden Arbeitsdruck-Regelkreis, an dem ein Arbeitsdruck-Sollwert (Ps) sowie ein durch einen Arbeitsdruck-Sensor (71) erfasster Arbeitsdruck-Istwert (Pi) anliegt, **dadurch gekennzeichnet, dass** im Arbeitsdruck-Regelkreis ein unterlagerter Vorsteuerdruck-Regelkreis mit einem Vorsteuerdruck-Regler (74) zur Regelung des Steuerventils (70) in Abhängigkeit des Ausgangssignals des Arbeitsdruck-Reglers (73) als Führungsgröße und des durch einen Vorsteuerdruck-Sensor (72) erfassten Vorsteuerkammerdrucks (Pm) als Istwert vorgesehen ist.

2. Regelungseinrichtung nach Anspruch 1, **dadurch gekennzeichnet, dass** das Steuerventil (70) als elektrisch steuerbares Proportionalventil ausgebildet ist, insbesondere als Magnetventil oder Piezoventil.

3. Regelungseinrichtung nach Anspruch 1 oder 2, **dadurch gekennzeichnet, dass** die als Membrankammer ausgebildete Vorsteuerkammer (24) über eine elastische Membran (55) mit dem Ventilglied (18) in Wirkverbindung steht.

4. Regelungseinrichtung nach Anspruch 3, **dadurch gekennzeichnet, dass** eine gegen den Druck der Vorsteuerkammer (24) auf das Ventilglied einwirkende Druckfeder (53) vorgesehen ist.

5. Regelungseinrichtung nach einem der vorhergehenden Ansprüche, **dadurch gekennzeichnet, dass** der Arbeitsdruck-Sensor (71) im Arbeitsdruckanschluss (19) oder in einem mit diesem verbundenen Kanal im Druckproportionalventil angeordnet ist.

6. Regelungseinrichtung nach einem der vorhergehenden Ansprüche, **dadurch gekennzeichnet, dass** der Vorsteuerdruck-Sensor (72) in der Vorsteuerkammer (24) angeordnet ist.

7. Regelungseinrichtung nach einem der vorhergehenden Ansprüche, **dadurch gekennzeichnet, dass** ein im Vorsteuerdruck-Regelkreis enthaltener Vorsteuerdruck-Regler (74) mit dem Steuerventil (70) zur Regelung desselben verbunden ist.
